# EUROPÄISCHE PATENTSCHRIFT

(11) **EP 3 255 302 B1**
(45) Veröffentlichungstag und Bekanntmachung des Hinweises auf die Patenterteilung: **18.03.2020**
(21) Anmeldenummer: 17169847.5
(22) Anmeldetag: 08.05.2017
(51) Int. Cl.: F16F 9/36, F16F 7/09, F16F 9/32, F16F 9/06

(54) **FÜHRUNGS-/DÄMPFUNGSEINHEIT UND KOLBENGEHÄUSEEINHEIT**
GUIDE/DAMPING UNIT AND PISTON HOUSING UNIT
UNITÉ D'AMORTISSEMENT/DE GUIDAGE ET UNITÉ DE CYLINDRE

(30) Priorität: 08.06.2016 DE 102016210162
(43) Veröffentlichungstag der Anmeldung: 13.12.2017
(73) Patentinhaber: SUSPA GmbH, 90518 Altdorf (DE)
(72) Erfinder: Bauer, Michael, 92271 Freihung (DE); Weder, Michael, 90455 Nürnberg (DE)
(74) Vertreter: Rau, Schneck & Hübner Patentanwälte Rechtsanwälte PartGmbB

(56) Entgegenhaltungen:
- EP-A1- 0 301 190
- EP-A1- 2 808 284
- EP-A2- 0 490 386
- EP-A2- 2 628 975
- WO-A1-2015/119931
- DE-A1- 2 160 573
- DE-A1- 2 238 595
- DE-A1- 2 410 989
- DE-A1- 3 811 742
- DE-A1-102008 024 039
- DE-U1- 8 508 931
- GB-A- 1 586 854
- US-A1- 2004 148 976
- US-A1- 2015 091 227
- US-A1- 2016 024 705

## Beschreibung

Die Erfindung betrifft eine Führungs-/Dämpfungseinheit und eine Kolbengehäuseeinheit.

Kolbengehäuseeinheiten sind aus der EP 0 301 190 A1, der DE 10 2008 024 039 A1, der DE 24 10 989 A1, der EP 0 490 386 A2, der DE 21 60 573 A1, der US 2004/148 976 A1, der DE 85 08 931 U1, der EP 2 808 284 A1, der WO 2015/119 931 A1, der GB 1 586 854 A, der EP 2 628 975 A2, der DE 38 11 742 A1, der DE 2 238 595 A beispielsweise in Form von Lineardämpfern bekannt. Die US 2016/0024705 A1 offenbart einen Reibungsdämpfer mit einer mittels einer Schraubenfeder vorgespannten Kolbenstange. US 2015/091 227 A1 offenbart alle technische Merkmale des Oberbegriffs des ersten Anspruchs.

Es ist die Aufgabe der vorliegenden Erfindung, eine Kolbengehäuseeinheit mit verbesserter Funktionalität bereitzustellen, die insbesondere unkompliziert und robust ausgeführt ist.

Diese Aufgabe ist erfindungsgemäß gelöst durch eine Kolbengehäuseeinheit mit den in Anspruch 1 angegebenen Merkmalen.

Erfindungsgemäß wurde erkannt, dass eine verbesserte und insbesondere erweiterte Funktionalität einer Kolbengehäuseeinheit mittels einer Führungs-/Dämpfungseinheit ermöglicht ist. Die Führungs-/Dämpfungseinheit weist ein Führungselement und mindestens ein Dämpfungselement auf. Die Kolbengehäuseeinheit weist ein Gehäuse mit einer Längsachse und eine, insbesondere entlang der und/oder um die Längsachse, verlagerbare Kolbenstange auf. An der Kolbenstange kann ein Kolben befestigt sein. Die Führungs-/Dämpfungseinheit dient zur Führung und zur Dämpfung der Verlagerung der Kolbenstange. Die Führungs-/Dämpfungseinheit gewährleistet eine Funktionsintegration. Die Führungsfunktion und die Dämpfungsfunktion sind in einer einzigen Einheit kombiniert. Das Führungselement und das Dämpfungselement sind in der Führungs-/Dämpfungseinheit zueinander festgelegt. Die Führungs-/Dämpfungseinheit bildet eine Baugruppe, in der das Führungselement und das Dämpfungselement zusammengefasst sind. Das Führungselement und das Dämpfungselement sind in der Führungs-/Dämpfungseinheit zueinander unverlagerbar angeordnet. Das Führungselement und das Dämpfungselement sind insbesondere bezüglich einer Drehung um eine Längsachse der Kolbengehäuseeinheit und insbesondere bezüglich einer Axialverlagerung längs der Längsachse unverlagerbar in der Führungs-/Dämpfungseinheit angeordnet. Aufgrund der Führungsfunktion wirkt die Führungs-/Dämpfungseinheit ähnlich einem Gleitlager oder einer Führungsbuchse. Die Kolbengehäuseeinheit und insbesondere die Führungs-/Dämpfungseinheit sind unkompliziert ausgeführt und robust in der Anwendung.

Die Führungs-/Dämpfungseinheit umschließt die Kolbenstange insbesondere voll umfänglich, sodass die Führungs-/Dämpfungseinheit die Führung und die Dämpfung einer Rotation bezüglich der Längsachse gewährleistet. Die Kolbenstange durchdringt die Führungs-/Dämpfungseinheit vollständig in axialer Richtung der Längsachse, sodass eine axiale Führung und Dämpfung der Verlagerung der Kolbenstange gewährleistet sind.

Die Ausführung der Führungs-/Dämpfungseinheit mit einem Führungselement ermöglicht eine verbesserte Führungsfunktion. Das Führungselement ist insbesondere am Gehäuse befestigbar und insbesondere hülsenförmig ausgeführt.

Das Dämpfungselement ermöglicht eine unmittelbare Dämpfung der Verlagerung der Kolbenstange.

Die Ausführung des Führungselements mit zwei Halbschalen ermöglicht eine vorteilhafte Herstellung und Montage. Das Führungselement weist insbesondere zwei identisch ausgeführte Halbschalen auf, die miteinander verbindbar sind.

Die Ausführung des Führungselements gemäß Anspruch 3 ermöglicht eine unmittelbare Führung der Kolbenstange. Mindestens ein Linearführungsabschnitt dient zur insbesondere voll umfänglichen Aufnahme der Kolbenstange. Der Linearführungsabschnitt ist als Durchgangsbohrung ausgeführt, die einen Innenquerschnitt aufweist, die dem Querschnitt der Kolbenstange entspricht. Insbesondere sind zwei Linearführungsabschnitte vorgesehen, die entlang der Längsachse beabstandet angeordnet sind.

Das Dämpfungselement umschließt die Kolbenstange, insbesondere voll umfänglich.

Die Ausführung des Dämpfungselements mit einem Dämpfungsring oder mindestens einem Dämpfungsstreifen ist unkompliziert. Insbesondere ein Dämpfungsstreifen kann unmittelbar und unkompliziert aus dem erforderlichen Dämpfungsmaterial zugeschnitten werden. Der Dämpfungsstreifen kann um die Kolbenstange herum angelegt werden.

Es ist denkbar, zwei oder mehr voneinander getrennte Dämpfungsstreifen vorzusehen.

Die Ausführung der Führungs-/Dämpfungseinheit gemäß Anspruch 6 ermöglicht eine unkomplizierte und unmittelbare Anordnung des Dämpfungselements im Führungselement. In einer dafür vorgesehenen Dämpfungselementaufnahme ist das Dämpfungselement insbesondere sowohl in axialer als auch in radialer Richtung bezogen auf die Längsachse gehalten. Zusätzliche Befestigungselemente sind entbehrlich. Die Ausführung der Führungs-/Dämpfungseinheit ist besonders robust.

Eine Ausführung gemäß Anspruch 7 ist besonders vorteilhaft. Eine Innennut kann einteilig am Führungselement ausgeführt sein.

Eine Fetttasche gemäß Anspruch 8 ermöglicht eine zuverlässige Nachfettung des Dämpfungselements. Die Funktion der Kolbengehäuseeinheit, insbesondere die Dämpfungsfunktion, ist über die erwartbare Lebensdauer der Kolbengehäuseeinheit gewährleistet. Insbesondere dient die Fetttasche als Fettreservoir, das bezüglich seines Volumens an die erwartbare Lebensdauer angepasst ist.

Die Ausführung der Fetttasche gemäß Anspruch 9 ermöglicht eine vorteilhafte Integration in das Führungselement.

Die Ausführung gemäß Anspruch 10 ermöglicht eine Anpassung der Dämpfungswirkung der Kolbengehäuseeinheit. Die Dämpfungswirkung der Kolbengehäuseeinheit ist individualisierbar. Die Dämpfungswirkung der Kolbengehäuseeinheit ist bedarfsgerecht anpassbar. Insbesondere kann durch eine Vorspannkraft, mit der ein ebener Dämpfungsstreifen in der Führungs-/Dämpfungseinheit angeordnet ist, eine eingeprägte Rückstellkraft von dem Dämpfungsstreifen auf die Kolbenstange veränderlich festgelegt werden. In Abhängigkeit der Rückstellkraft des Dämpfungsstreifens auf die Kolbenstange ergibt sich die Reibkraft und damit die Reibwirkung auf die Verlagerung der Kolbenstange.

Die Anordnung der Führungs-/Dämpfungseinheit gemäß Anspruch 11 gewährleistet eine definierte Führungsfunktion.

Eine Ausführung der Kolbengehäuseeinheit gemäß Anspruch 12 ermöglicht eine vorteilhafte Bauform. Dadurch, dass die Führungs-/Dämpfungseinheit, insbesondere vollständig, im Gehäuse der Kolbengehäuseeinheit integriert ist, weist die Kolbengehäuseeinheit eine einfache, insbesondere hinterschnittfreie Geometrie auf. Die Herstellung der einzelnen Komponenten ist dadurch vereinfacht. Die Montage der Komponenten miteinander ist vereinfacht. Der Aufwand zur Herstellung der Einzelteile ist reduziert. Die Kolbengehäuseeinheit ist kosteneffizient herstellbar. Die Führungs-/Dämpfungseinheit der Kolbengehäuseeinheit kann insbesondere vorteilhaft als Führungsschiene für einen Sitz in einem Automobil oder als Wellenlagerung in einem Gehäuse eingesetzt werden.

Eine Ausführung des Gehäuses gemäß Anspruch 13 ermöglicht eine effektive und leichtbauende Ausführung der Kolbengehäuseeinheit. Das Gehäuse ist kosteneffizient als Rohrabschnitt herstellbar. Insbesondere ist das Gehäuse hohlzylinderförmig ausgeführt. Bei entsprechender Kolbengestaltung ist eine Relativdrehung der Kolbenstange mit dem Kolben gegenüber dem Gehäuse um die Längsachse möglich. Es ist denkbar, dass das Gehäuse und/oder der Kolben eine unrunde Kontur aufweisen, die beispielsweise eckig, insbesondere rechteckig, ausgeführt sein kann. Der Kolben ist insbesondere unverdrehbar im Gehäuse angeordnet. Eine Verdrehsicherung zwischen dem Gehäuse und dem Kolben mit der Kolbenstange ist gewährleistet. Vorteilhaft ist es, wenn die Querschnittsform, insbesondere die innere Kontur des Hohlprofils, des Gehäuses eine entlang der Längsachse unveränderliche Querschnittsform aufweist.

Weitere vorteilhafte Ausgestaltungen, zusätzliche Merkmale und Einzelheiten ergeben sich aus der nachfolgenden Beschreibung von Ausführungsbeispielen anhand der Zeichnungen. Es zeigen:
- Fig. 1: eine perspektivische Darstellung einer erfindungsgemäßen Kolbengehäuseeinheit,

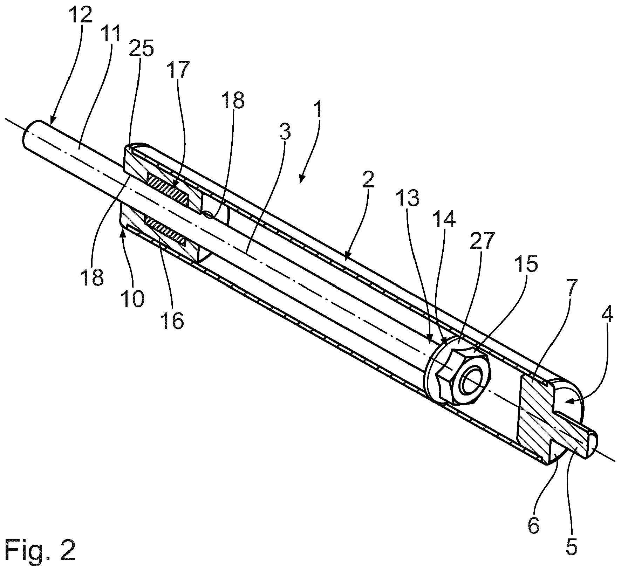

- Fig. 2: einen Längsschnitt gemäß Schnittlinie II-II in Fig. 1
- Fig. 3: eine Fig. 1 entsprechende Darstellung der Kolbengehäuseeinheit in Explosionsdarstellung
- Fig. 4: eine vergrößerte Darstellung der Führungs-/ Dämpfungseinheit der Kolbengehäuseeinheit gemäß Fig. 1
- Fig. 5: eine Fig. 4 entsprechende Darstellung der Führungs/Dämpfungseinheit in einer Explosionsdarstellung,
- Fig. 6: eine perspektivische Darstellung einer Halbschale eines Führungselements der Führungs-/Dämpfungseinheit,
- Fig. 7: eine Fig. 2 entsprechende Darstellung einer Kolbengehäuseeinheit gemäß einem zweiten Ausführungsbeispiel und
- Fig. 8: eine Fig. 2 entsprechende Darstellung einer Kolbengehäuseeinheit gemäß einem dritten Ausführungsbeispiel.

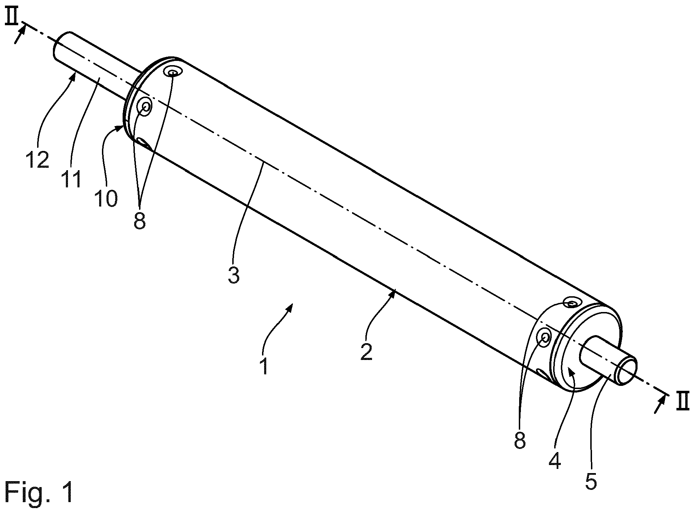

Eine Kolbengehäuseeinheit 1 weist ein hohlzylindrisches Gehäuse 2 mit einer Längsachse 3 auf. An einem ersten Ende, das in Fig. 1 rechts dargestellt ist, ist das Gehäuse 2 der Kolbengehäuseeinheit 1 mittels einer Verschlusskappe 4 verschlossen. Die Verschlusskappe 4 weist einen konzentrisch zur Längsachse 3 angeordneten Befestigungszapfen 5 auf, der an einer Abdeckplatte 6 einstückig angeformt ist. Die Abdeckplatte 6 ist senkrecht zur Längsachse 3 orientiert. Der Zapfen ist an einer im Gehäuse 2 abgewandten Außenseite der Abdeckplatte 6 angeordnet. An einer dem Gehäuse 2 zugewandten Innenseite weist die Verschlusskappe einen Einsteckbund 7 auf, mit dem die Verschlusskappe 4 in das erste Ende des Gehäuses 2 eingesteckt werden kann. Der Einsteckbund 7 kann mit dem Gehäuse 2 formschlüssig und insbesondere unlösbar verbunden werden. Dazu können entlang des äußeren Umfangs des Gehäuses 2 mehrere, insbesondere sechs, Einprägungen 8 vorgesehen sein, die in radialer Richtung bezogen auf die Längsachse 3 in korrespondierende Gegen-Einprägungen 9 eingreifen. Die Verschlusskappe 4 ist am Gehäuse 2 sowohl axial als auch radial bezogen auf die Längsachse 3 sicher gehalten.

An einem der Verschlusskappe 4 gegenüberliegenden, zweiten Ende ist an dem Gehäuse 2 eine Führungs-/Dämpfungseinheit 10 angeordnet. Die Führungs-/Dämpfungseinheit 10 ist ähnlich wie die Verschlusskappe 4 stirnseitig in das offene Ende des Gehäuses 2 eingeschoben und dort formschlüssig mittels Einprägungen 8 und Gegen-Einprägungen 9 befestigt.

Durch die Führungs-/Dämpfungseinheit 10 hindurch bezüglich der axialen Ausrichtung der Längsachse 3 ist eine Kolbenstange 11 aus dem Gehäuse 2 herausgeführt. Die Kolbenstange 11 ist mit einem ersten, freien Ende 12 außerhalb des Gehäuses 2 angeordnet. Ein gegenüberliegendes, zweites Ende 13 ist innerhalb des Gehäuses 2 angeordnet. An dem zweiten Ende 13 der Kolbenstange 11 ist ein Kolben 14 befestigt, der gemäß dem gezeigten Ausführungsbeispiel durch eine ringförmige Scheibe 27 ausgeführt ist, die mittels einer Befestigungsmutter 15 an der Kolbenstange 11 gehalten ist. Der Kolben 14 gemäß dem ersten Ausführungsbeispiel ist ein Ausziehschutz. Der Kolben 14 verhindert, dass die Kolbenstange 11 unbeabsichtigt aus dem Gehäuse herausgezogen wird. Die ringförmige Scheibe 27 weist einen Außendurchmesser auf, der größer ist als ein Innendurchmesser einer durchgängigen Öffnung der Führungs-/Dämpfungseinheit 10. Die ringförmige Scheibe 27 dient als Anschlagelement an der Führungs-/Dämpfungseinheit 10.

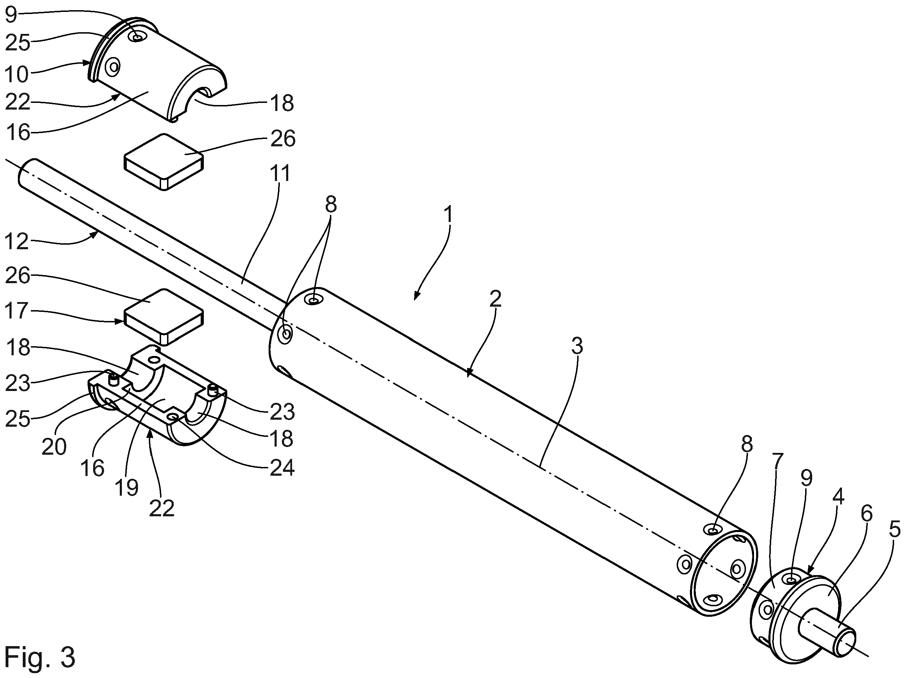

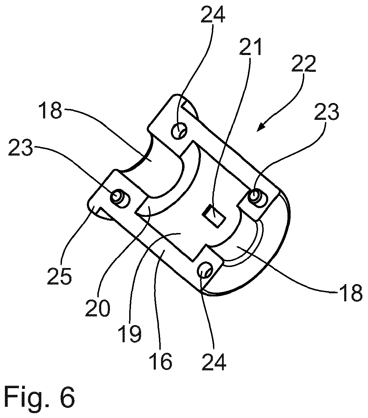

Nachfolgend wird anhand der Fig. 3 bis 6 die Führungs-/Dämpfungseinheit 10 näher erläutert. Die Führungs-/Dämpfungseinheit 10 weist an einer dem Gehäuse 2 abgewandten Stirnseite einen Anschlagbund 25 auf. Der Anschlagbund 25 steht in radialer Richtung bezogen auf die Längsachse 3 an der Führungs-/Dämpfungseinheit 10 über. Der Anschlagbund 25 begrenzt eine maximale Einschubtiefe der Führungs-/Dämpfungseinheit 10. Die Führungs-/Dämpfungseinheit 10 kann unmittelbar und definiert bezüglich der Axialposition im Gehäuse 2 angeordnet werden. Die Montage der Kolbengehäuseeinheit 1 ist vereinfacht.

Die Führungs-/Dämpfungseinheit 10 weist ein Führungselement 16 und ein Dämpfungselement 17 auf. Das Führungselement 16 und das Dämpfungselement 17 sind in der Führungs-/Dämpfungseinheit integriert.

Das Führungselement 16 ist hülsenförmig ausgeführt mit einer entlang der Längsachse 3 durchgängigen Öffnung, durch die hindurch die Kolbenstange 11 geführt ist. Das Führungselement 16 weist zwei Linearführungsabschnitte 18 auf, die entlang der Längsachse 3 beabstandet zueinander angeordnet sind. Die Linearführungsabschnitte 18 erstrecken sich jeweils von einem stirnseitigen Ende der Führungs-/Dämpfungseinheit 10 aus. Die Linearführungsabschnitte 18 sind als Durchgangskanäle mit hohlzylinderförmiger Innenkontur ausgeführt, die etwa der Außenkontur der Kolbenstange 11 in einer Ebene senkrecht zur Längsachse 3 entspricht.

Entlang der Längsachse 3 ist zwischen den Linearführungsabschnitten 18 eine Dämpfungselementaufnahme 19 vorgesehen, in die das Dämpfungselement 17 eingelegt werden kann. In axialer Richtung bezogen auf die Längsachse 3 ist die Dämpfungselementaufnahme 19 durch die beiden jeweils benachbart angeordneten Linearführungsabschnitte 18 begrenzt. Die Dämpfungselementaufnahme 19 ist als Innennut ausgeführt und weist eine gegenüber dem Linearführungsabschnitt 18 vergrößerte Nuttiefe auf. Zwischen der Dämpfungselementaufnahme 19 und dem jeweils angrenzenden Linearführungsabschnitt 18 ist eine axiale Anlageschulter 20 ausgebildet.

Die Führungs-/Dämpfungseinheit 10, insbesondere das Führungselement 16, weist zwei Fetttaschen 21 auf, die jeweils als Fettreservoir für das Dämpfungselement 17 dienen. Die Fetttaschen 21 sind jeweils an einer Innenseite der Innennut, also an einer Innenseite der Dämpfungselementaufnahme 19 angeordnet. Von den Fetttaschen 21 kann Fett an das Dämpfungselement 17 unmittelbar abgegeben werden.

Das Führungselement 16 ist mehrteilig, insbesondere in Form von zwei identisch ausgeführten Halbschalen 22 ausgeführt. Die Halbschalen 22 sind bezüglich einer Trennebene, die die Längsachse 3 umfasst, voneinander trennbar. Die Halbschalen 22 weisen Verbindungselemente 23 und dazu korrespondierende Verbindungsgegenelemente 24 auf. Die Verbindungselemente 23 sind gemäß dem gezeigten Ausführungsbeispiel als Steckzapfen ausgeführt, die in korrespondierende Steckaufnahmen eingreifen können. Die Halbschalen 22 sind als Gleichteile ausgeführt. Der Herstellungsaufwand für die Führungs-/Dämpfungseinheit 10 ist reduziert. Die Verbindungselemente 23 und Verbindungsgegenelemente 24 gewährleisten, dass die Halbschalen 22 definiert zueinander angeordnet sind. Ein Lösen der Verbindung ist, nachdem die Führungs-/Dämpfungseinheit 10 in das Gehäuse 2 eingeschoben ist, ausgeschlossen. Die Verbindung der Halbschalen 22 gewährleistet einen sicheren und unverlierbaren Halt der Führungs-/Dämpfungseinheit 10 im Gehäuse 2 der Kolbengehäuseeinheit 1.

Es ist auch denkbar, das Führungselement einteilig oder mit mehr als zwei Halbschalen auszuführen. Vorteilhaft ist es, wenn die Einzelteile, aus welchem das Führungselement 16 gebildet ist, als Gleichteile ausgeführt sind. Es ist beispielsweise auch möglich, Viertelschalen-Elemente vorzusehen.

Das Dämpfungselement 17 ist in Form von zwei identisch ausgeführten Dämpfungsstreifen 26 ausgeführt. Die Dämpfungsstreifen 26 sind im Ausgangszustand, also bevor sie in die Dämpfungselementaufnahme 19 des Führungselements 16 eingelegt worden sind, flächig, insbesondere eben, ausgeführt. Durch das Einlegen der Dämpfungsstreifen 26 in die Führungs-/Dämpfungseinheit 10 werden die Dämpfungsstreifen 26 deformiert, insbesondere zylinderhalbschalenförmig gebogen. Die Dämpfungsstreifen 26 sind aus einem elastischen Dämpfungsmaterial, insbesondere aus geschäumtem Kunststoff, insbesondere aus Schaumstoff hergestellt.

Die Eigensteifigkeit des Dämpfungsmaterials für die Dämpfungsstreifen 26 ist insbesondere mindestens so groß, dass eine Rückstellkraft eingeprägt ist, die bewirkt, dass die Dämpfungsstreifen 26 sich eigenständig in den flächigen Ausgangszustand verlagern möchten. Insofern wirkt eine Anpresskraft von dem Dämpfungsstreifen 26 auf die Kolbenstange 11.

Die Dämpfungsstreifen 26 weisen eine Streifenbreite auf, die entlang der Längsachse 3 orientiert ist. Die Streifenbreite des Dämpfungsstreifens 26 entspricht der Breite der Dämpfungselementaufnahme 19.

Gemäß einem nicht gezeigten Ausführungsbeispiel kann die Breite der Dämpfungselementaufnahme 19 größer sein als die Streifenbreite des Dämpfungsstreifens 26. Insbesondere beträgt die Breite der Dämpfungselementaufnahme 19 mindestens 105% der Streifenbreite des Dämpfungsstreifens 26, insbesondere mindestens 110%, insbesondere mindestens 120% und insbesondere mindestens 125%. Bei dieser Ausführung ist der Dämpfungsstreifen 26 entlang der Längsachse 3 axial in der Dämpfungselementaufnahme 19 verlagerbar. Bei einer Axialverlagerung der Kolbenstange 11 wird infolge der Haftreibung der Dämpfungsstreifen 26 zunächst axial entlang der Längsachse 3 mitverlagert, bis der Dämpfungsstreifen 26 stirnseitig am Ende der Dämpfungselementaufnahme 19, insbesondere an der axialen Anlageschulter 20, anliegt. Die axiale Anlageschulter 20 hindert den Dämpfungsstreifen 26 an einer weiteren Axialverlagerung. Bei einer weiteren Verlagerung der Kolbenstange 11 tritt eine Relativbewegung zwischen der Kolbenstange 11 und dem Dämpfungsstreifen 26 auf. Ab diesem Zeitpunkt wird eine Reibungskraft durch das Anliegen des Dämpfungsstreifens 26 am der Kolbenstange 11 bewirkt.

Zu Beginn der Axialverlagerung der Kolbenstange tritt bei diesem Ausführungsbeispiel also keine oder allenfalls eine geringe Dämpfungskraft auf. Eine derartige Kolbengehäuseeinheit ermöglicht eine sogenannte Soft-Start-Charakteristik.

Der Dämpfungsstreifen 26 ist mit einer Streifendicke ausgeführt, die größer ist als die Nuttiefe der Dämpfungselementaufnahme 19. Dadurch ist gewährleistet, dass eine radiale Anpressung des Dämpfungsstreifens 26 an die Kolbenstange zuverlässig gewährleistet ist. Insbesondere beträgt die Streifendicke des Dämpfungsstreifens 26 mindestens 105% der Nuttiefe, insbesondere mindestens 115%, insbesondere mindestens 125%, insbesondere mindestens 130% und insbesondere mindestens 135%. Die Nuttiefe der Dämpfungselementaufnahme 19 kann auch im Wesentlichen der Streifendicke des Dämpfungsstreifens 26 entsprechen.

Die Streifenlänge der Dämpfungsstreifen 26 ist derart bemessen, dass beim Einlegen der Dämpfungsstreifen sich im Wesentlichen ein geschlossener Dämpfungsring ausbildet, der sich entlang des gesamten Umfangs der Dämpfungselementaufnahme 19 erstreckt. Es ist auch denkbar, mehr als zwei Dämpfungsstreifen 26 oder nur einen Dämpfungsstreifen vorzusehen. Es ist auch denkbar, einen geschlossenen Dämpfungsring als Dämpfungselement 17 einzusetzen.

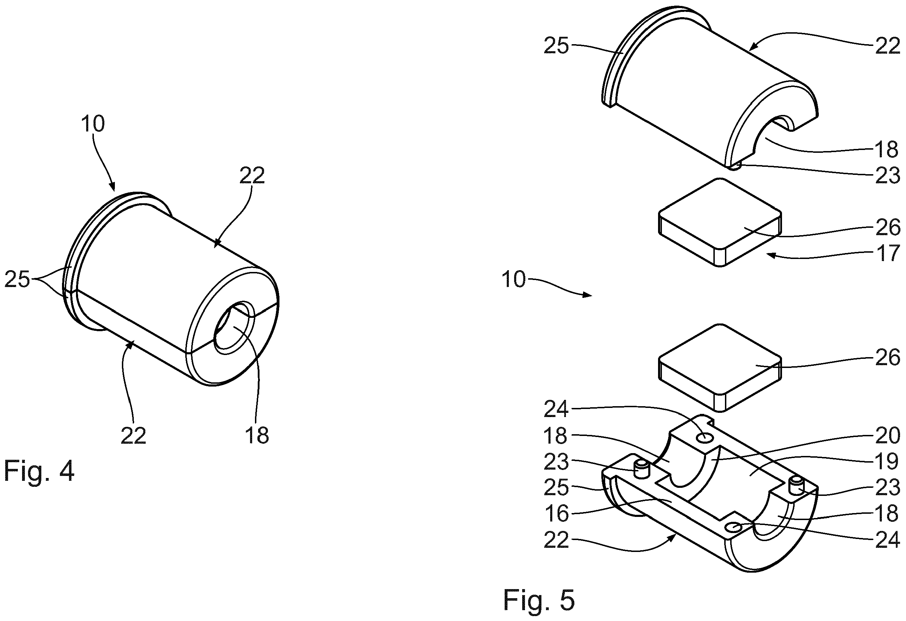

Der wesentliche Vorteil der Ausgestaltung der Führungs-/ Dämpfungseinheit 10, wie in Fig. 5 dargestellt, besteht darin, die Einheit 10 lediglich aus zwei unterschiedlichen Einzelteilen besteht, nämlich den Halbschalen 22 und den Dämpfungsstreifen 26. Die Herstellung der Führungs-/ Dämpfungseinheit 10 ist kosteneffizient möglich.

Nachfolgend wird die Montage der Kolbengehäuseeinheit 1 näher erläutert. Zunächst wird das Gehäuse 2 an dem ersten Ende mittels der Verschlusskappe 4 verschlossen. Anschließend wird die Kolbenstange 11 mit dem zweiten Ende 13 in das Gehäuse 2 eingeführt. In dem Bereich der Kolbenstange 11, der aus dem Gehäuse 2 vorsteht, werden die beiden Halbschalen 22 mit jeweils einem eingelegten Dämpfungsstreifen 26 um die Kolbenstange 11 herum angeordnet und miteinander verbunden. Durch das Verbinden der Halbschalen 22 werden die Dämpfungsstreifen 26 in die Dämpfungselementaufnahme 19 eingedrückt und halbschalenförmig gebogen und anschließend werden die miteinander verbundenen Halbschalen 22 als Führungs-/Dämpfungseinheit 10 entlang der Kolbenstange 11 in das Gehäuse 2 geschoben, bis die Führungs-/Dämpfungseinheit 10 mit dem Anschlagbund 25 stirnseitig am Gehäuse 2 anliegt. Die Führungs-/ Dämpfungseinheit 10 wird über die Einprägungen 8 und die Gegeneinprägungen 9 am Gehäuse 2 befestigt.

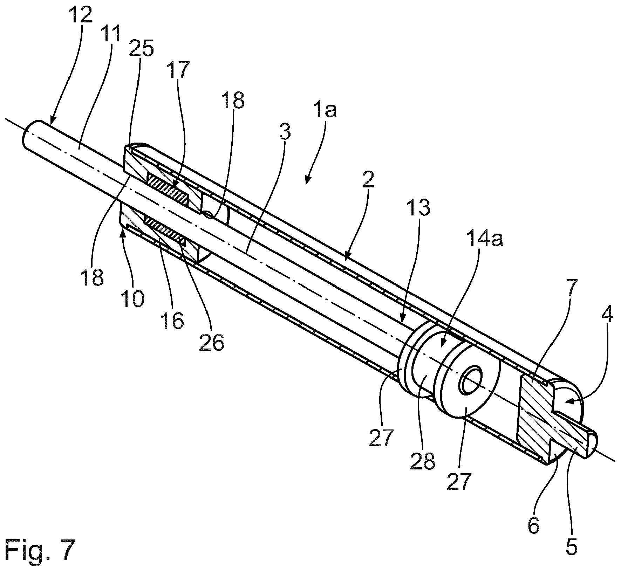

Im Folgenden wird unter Bezugnahme auf Fig. 7 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber dem ersten Ausführungsbeispiel besteht darin, dass der Kolben 14a zwei entlang der Längsachse 3 beabstandet zueinander angeordnete Scheiben 27 aufweist. Die Scheiben 27 sind insbesondere identisch ausgeführt. Die Scheiben 27 weisen einen Außendurchmesser auf, der kleiner ist als ein Innendurchmesser des zylindrischen Gehäuses 2. Zwischen den Scheiben 27 ist eine Ringnut 28 gebildet. Gemäß dem zweiten Ausführungsbeispiel dient der Kolben 14a als Ausziehschutz.

Die Ringnut 28 kann insbesondere durch eine zwischen den beiden Ringscheiben 27 angeordnete Distanzhülse ausgeführt sein. Die Scheiben 27 können an der Kolbenstange 11 vernietet sein.

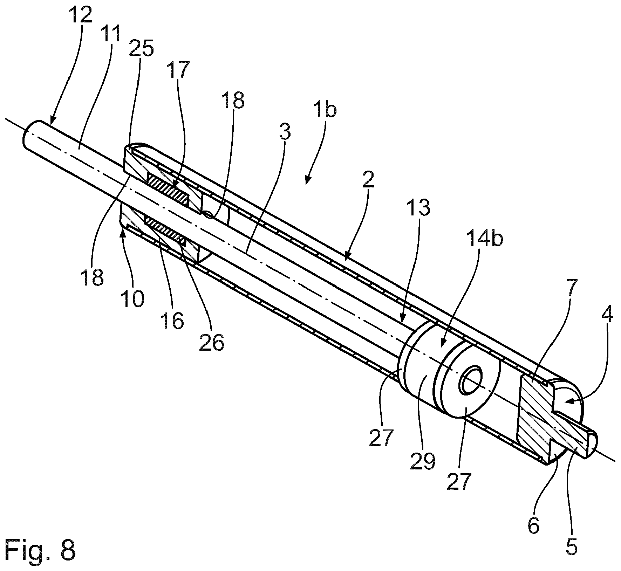

Nachfolgend wird anhand der Fig. 8 ein drittes Ausführungsbeispiel der Erfindung beschrieben. Konstruktiv identische Teile erhalten dieselben Bezugszeichen wie bei den beiden ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Gegenüber dem zweiten Ausführungsbeispiel unterscheidet sich das dritte Ausführungsbeispiel dadurch, dass in der Ringnut 28 ein Zusatz-Reibelement 29 angeordnet und insbesondere dort gehalten ist. Das Zusatz-Reibelement 29 ist derart ausgeführt, dass es reibend an einer Innenseite des Gehäuses 2 anliegt. Der Kolben 14b erfüllt gemäß diesem Ausführungsbeispiel eine Doppelfunktion, nämlich dient als Ausziehschutz und ermöglicht eine zusätzliche Reibkraft bei einer Axial- und/oder Drehverlagerung der Kolbenstange 11. Die mit der Kolbengehäuseeinheit 1b erzielbare Reibkraft ist erhöht.

## Patentansprüche

1. Kolbengehäuseeinheit umfassend
a. eine verlagerbare Kolbenstange (11),
b. eine Führungs-/Dämpfungseinheit (10) zur Führung und zur Dämpfung der Kolbenstange (11) in der Kolbengehäuseeinheit (1; 1a; 1b), wobei die Führungs-/Dämpfungseinheit (10) ein Führungselement (16) und mindestens ein Dämpfungselement (17) aufweist,
- wobei das Dämpfungselement (17) die Kolbenstange (11) umschließt,
- wobei das Dämpfungselement (17) einen Dämpfungsring oder mindestens einen Dämpfungsstreifen (26) aufweist,
- wobei der Dämpfungsring oder der mindestens eine Dämpfungsstreifen (26) aus einem elastischen Dämpfungsmaterial hergestellt ist,
- wobei das Führungselement (16) und das Dämpfungselement (17) in der Führungs-/Dämpfungseinheit (10) zueinander unverlagerbar angeordnet sind,
wobei
- die Kolbengehäuseeinheit (1; 1a; 1b) ein eine Längsachse (3) aufweisendes Gehäuse (2) aufweist,
- die Kolbenstange (11) mit einem ersten, freien Ende (12) außerhalb des Gehäuses (2) angeordnet ist,
- ein gegenüberliegendes, zweites Ende (13) der Kolbenstange (11) innerhalb des Gehäuses (2) angeordnet ist,
- an dem zweiten Ende (13) der Kolbenstange (11) ein Kolben (14) befestigt ist, wobei der Kolben (14) als Ausziehschutz dient,
**dadurch gekennzeichnet, dass** das Führungselement (16) zwei Halbschalen (22) aufweist.

2. Kolbengehäuseeinheit gemäß Anspruch 1, **dadurch gekennzeichnet, dass** das Führungselement (16) zwei identisch ausgeführte Halbschalen (22) aufweist.

3. Kolbengehäuseeinheit gemäß Anspruch 1 oder 2, **dadurch gekennzeichnet, dass** das Führungselement (16) mindestens einen Linearführungsabschnitt (18), insbesondere zwei entlang der Längsachse (3) beabstandete Linearführungsabschnitte (18), aufweist.

4. Kolbengehäuseeinheit gemäß einem der vorstehenden Ansprüche, **dadurch gekennzeichnet, dass** das Dämpfungselement (17) die Kolbenstange (11) vollumfänglich umschließt.

5. Kolbengehäuseeinheit gemäß Anspruch 4, **dadurch gekennzeichnet, dass** das Dämpfungselement (17) zwei Dämpfungsstreifen (26) aufweist.

6. Kolbengehäuseeinheit gemäß einem der vorstehenden Ansprüche, **dadurch gekennzeichnet, dass** das Dämpfungselement (17) in einer Dämpfungselementaufnahme (19) des Führungselements (16) angeordnet ist.

7. Kolbengehäuseeinheit gemäß Anspruch 6, **dadurch gekennzeichnet, dass** die Dämpfungselementaufnahme (19) als Innennut ausgeführt ist.

8. Kolbengehäuseeinheit gemäß einem der vorstehenden Ansprüche, **gekennzeichnet durch** mindestens eine, insbesondere in der Führungs-/Dämpfungseinheit (10) integrierte, Fetttasche (21).

9. Kolbengehäuseeinheit gemäß Anspruch 8, **dadurch gekennzeichnet, dass** die Fetttasche (21) in einer Halbschale (22) des Führungselements (16) angeordnet und insbesondere als Vertiefung an einer Innenfläche der Innennut ausgeführt ist.

10. Kolbengehäuseeinheit gemäß einem der vorstehenden Ansprüche, **dadurch gekennzeichnet, dass** die Dämpfungswirkung einstellbar ist, insbesondere durch eine Vorspannkraft, mit der ein Dämpfungsstreifen (26) in der Führungs-/Dämpfungseinheit (10) angeordnet ist.

11. Kolbengehäuseeinheit gemäß einem der vorherigen Ansprüche, **dadurch gekennzeichnet, dass** die Führungs-/Dämpfungseinheit (10) gehäusefest angeordnet ist.

12. Kolbengehäuseeinheit gemäß einem der vorherigen Ansprüche, **dadurch gekennzeichnet, dass** die Führungs-/Dämpfungseinheit (10) im Gehäuse (2) integriert ausgeführt ist.

13. Kolbengehäuseeinheit gemäß einem der vorherigen Ansprüche, **dadurch gekennzeichnet, dass** das Gehäuse (2) rohrförmig, insbesondere hohlzylinderförmig, ausgeführt ist.

## Claims

1. Piston housing unit including
a. an adjustable piston rod (11),
b. a guide/damping unit for guiding and damping the piston rod (11) in the piston housing unit (1; 1a; 1b), wherein the guide/damping unit (10) has a guide element (16) and at least one damping element (17),
- wherein the damping element (17) encloses the piston rod (11),
- wherein the damping element (17) has a damping ring or at least one damping strip (26),
- wherein the damping ring or the at least one damping strip (26) are made of an elastic damping material,
- wherein the guide element (16) and the damping element (17) are fixed to one another,
wherein
- the piston housing unit (1; 1a; 1b) has housing (2) with a longitudinal axis (3),
- the piston rod (11) is arranged outside of the housing (2) with a first, free end (12),
- an opposing, second end (13) of the piston rod (11) is arranged inside of the housing (2),
- a piston (14) is fitted on the second end (13) of the piston rod (11), the piston (14) being a collar-out protection,
**characterised in that** the guide element (16) has two half-shells (22).

2. Piston housing unit according to claim 1, **characterised in that** the guide element (16) has two identically designed half-shells (22).

3. Piston housing unit according to claim 1 or 2, **characterised in that** the guide element (16) has at least one linear guide section (18), in particular two linear guide sections (18) spaced a distance from each other along the longitudinal axis (3).

4. Piston housing unit according to one of the preceding claims, **characterised in that** the damping element (17) encloses the piston rod (11) around its entire circumference.

5. Piston housing unit according to claim 4, **characterised in that** the damping element (17) has two damping strips (26).

6. Piston housing unit according to one of the preceding claims, **characterised in that** the damping element (17) is arranged in a damping element recess (19) of the guide element (16).

7. Piston housing unit according to claim 6, **characterised in that** the damping element recess (19) is designed as an inner groove.

8. Piston housing unit according to one of the preceding claims, **characterised by** at least one grease pocket (21), in particular integrated into the guide/damping unit (10).

9. Piston housing unit according to claim 8, **characterised in that** the grease pocket (21) is arranged in a half-shell (22) of the guide element (16), and is in particular designed as an indentation in an inner surface of the inner groove.

10. Piston housing unit according to one of the preceding claims, **characterised in that** the damping effect can be set, in particular by means of a pre-tensioning force, with which a damping strip (26) is arranged in the guide/damping unit (10).

11. Piston housing unit according to one of the preceding claims, **characterised in that** guide/damping unit (10) is fitted in a housing.

12. Piston housing unit according to one of the preceding claims, **characterised in that** the guide/damping unit (10) is integrated into a housing (2).

13. Piston housing unit according to one of the preceding claims, **characterised in that** the housing (2) is designed tubular, in particular in a hollow cylinder shape.

## Revendications

1. Unité de boîtier de piston comprenant
a. une tige de piston (11) déplaçable,
b. une unité de guidage/d'amortissement (10) destinée au guidage et à l'amortissement de la tige de piston (11) dans l'unité de boîtier de piston (1 ; la ; 1b), l'unité de guidage/d'amortissement (10) comportant un élément de guidage (16) et au moins un élément d'amortissement (17),
- l'élément d'amortissement (17) entourant la tige de piston (11),
- l'élément d'amortissement (17) comportant un anneau d'amortissement ou au moins une bande d'amortissement (26),
- l'anneau d'amortissement ou l'au moins une bande d'amortissement (26) étant constitué(e) d'un matériau d'amortissement élastique,
- l'élément de guidage (16) et l'élément d'amortissement (17) étant disposés dans l'unité de guidage/d'amortissement (10) de manière à ne pas pouvoir se déplacer l'un par rapport à l'autre,
dans laquelle
- l'unité de cylindre (1 ; 1a ; 1b) comporte un boîtier (2) comportant un axe longitudinal (3),
- la tige de piston (11) est disposée conjointement avec une première extrémité (12) libre à l'extérieur du boîtier (2),
- une seconde extrémité (13) opposée de la tige de piston (11) est disposée à l'intérieur du boîtier (2),
- un piston (14) est fixé à la seconde extrémité (13) de la tige de piston (11), le piston (14) servant de sécurité lors de l'extraction,
**caractérisée en ce que** l'élément de guidage (16) comporte deux demi-coquilles (22).

2. Unité de boîtier de piston selon la revendication 1, **caractérisée en ce que** l'élément de guidage (16) comporte deux demi-coquilles (22) de conception identique.

3. Unité de boîtier de piston selon la revendication 1 ou 2, **caractérisée en ce que** l'élément de guidage (16) comporte au moins une section de guidage linéaire (18), en particulier deux sections de guidage linéaires (18) espacées le long de l'axe longitudinal (3).

4. Unité de boîtier de piston selon l'une des revendications précédentes, **caractérisée en ce que** l'élément d'amortissement (17) entoure entièrement la tige de piston (11).

5. Unité de boîtier de piston selon la revendication 4, **caractérisée en ce que** l'élément d'amortissement (17) comporte deux bandes d'amortissement (26).

6. Unité de boîtier de piston selon l'une des revendications précédentes, **caractérisée en ce que** l'élément d'amortissement (17) est disposé dans un logement d'élément d'amortissement (19) de l'élément de guidage (16).

7. Unité de boîtier de piston selon la revendication 6, **caractérisée en ce que** le logement d'élément d'amortissement (19) est réalisé sous la forme d'une rainure intérieure.

8. Unité de boîtier de piston selon l'une des revendications précédentes, **caractérisée par** au moins une poche de graisse (21), en particulier intégrée dans l'unité de guidage/d'amortissement (10).

9. Unité de boîtier de piston selon la revendication 8, **caractérisée en ce que** la poche de graisse (21) est disposée dans une demi-coque (22) de l'élément de guidage (16) et est en particulier réalisée sous la forme d'un évidement sur une surface intérieure de la rainure intérieure.

10. Unité de boîtier de piston selon l'une des revendications précédentes, **caractérisée en ce que** l'effet d'amortissement peut être réglé, en particulier par une force de précontrainte avec laquelle une bande d'amortissement (26) est disposée dans l'unité de guidage/d'amortissement (10).

11. Unité de boîtier de piston selon l'une des revendications précédentes, **caractérisée en ce que** l'unité de guidage/d'amortissement (10) est disposée de manière fixe sur le boîtier.

12. Unité de boîtier de piston selon l'une des revendications précédentes, **caractérisée en ce que** l'unité de guidage/d'amortissement (10) est conçue pour être intégrée dans le boîtier (2).

13. Unité de boîtier de piston selon l'une des revendications précédentes, **caractérisée en ce que** le boîtier (2) est réalisé sous la forme d'un tube, en particulier sous la forme d'un cylindre creux.
